# EUROPEAN PATENT SPECIFICATION

(11) **EP 2 410 034 B1**
(45) Date of publication and mention of the grant of the patent: **03.05.2017**
(21) Application number: 09841708.2
(22) Date of filing: 18.03.2009
(51) Int. Cl.: C09K 11/78

(54) **GERMANATE LUMINESCENCE MATERIAL AND ITS PREPARATION**
GERMANAT ALS LEUCHTSTOFF UND SEINE HERSTELLUNG
MATIÈRE LUMINESCENTE À BASE DE GERMANATE ET SA PRÉPARATION

(43) Date of publication of application: 25.01.2012
(73) Proprietor: Ocean's King Lighting Science&Technology Co., Ltd., Guangdong 518052 (CN)
(72) Inventor: ZHOU, Mingjie, Guangdong 518052 (CN); MA, Wenbo, Guangdong 518052 (CN); SHI, Zhaopu, Guangdong 518052 (CN)
(74) Representative: Ciceri, Fabio
(86) International application number: PCT/CN2009/070877
(87) International publication number: WO 2010/105424

(56) References cited:
- EP-A2- 1 184 440
- US-A- 3 542 690
- US-A1- 2009 026 477
- ZHAO F ET AL: "Luminescent properties of Eu<3+>, Tb<3+> or Bi<3+> activated yttrium germanates", MATERIALS RESEARCH BULLETIN, ELSEVIER, KIDLINGTON, GB, vol. 38, no. 6, 26 May 2003 (2003-05-26), pages 931-940, XP004428203, ISSN: 0025-5408, DOI: 10.1016/S0025-5408(03)00086-2
- JOUNG KYU PARK ET AL: "Photoluminescence Properties of Eu[3+]-Activated Y2GeO5 Phosphors", JOURNAL OF THE ELECTROCHEMICAL SOCIETY, vol. 150, no. 8, 1 January 2003 (2003-01-01), page H187, XP55034769, ISSN: 0013-4651, DOI: 10.1149/1.1591762
- GUO P ET AL: "Novel phosphors of Eu<3+>, Tb<3+> or Bi<3+> activated Gd2GeO5", JOURNAL OF LUMINESCENCE, ELSEVIER BV NORTH-HOLLAND, NL, vol. 105, no. 1, 1 September 2003 (2003-09-01), pages 61-67, XP004443828, ISSN: 0022-2313, DOI: 10.1016/S0022-2313(03)00098-X
- PARK, JOUNG KYU ET AL.: 'Photoluminescence Properties of Eu3+ -Activated Y2GeO5 Phosphors' JOURNAL OF THE ELECTROCHEMICAL SOCIETY vol. 150, no. 8, 2003, pages 187 - 191, XP055034769
- ZHAO FEI ET AL.: 'Luminescent Properties of Eu3+, Tb3+or Bi3+ Activated Yttrium Germanates' MATERIALS RESEARCH BULLETIN vol. 38, 2003, pages 931 - 940, XP004428203
- GUO PEIMIN ET AL.: 'Novel Phosphors of Eu3+, Tb3+ or Bi3+ Activated Gd2Ge05' JOURNAL OF LUMINESCENCE vol. 105, 2003, pages 61 - 67, XP004443828

## Description

### FIELD OF THE INVENTION

The present invention belongs to photoelectron and lighting technical field and relates to a germanate luminescence material and its preparation. The germanate luminescence material can be applied in multicolor lighting devices including the semiconductor LED lighting component.

### BACKGROUND OF THE INVENTION

With the development of semiconductor lighting technology (LED), such revolutionary new lighting resource has been gradually come into our daily life. When the third generation semiconductor material gallium nitride is applied as the semiconductor lighting source, its power consumption is just 1/10 of that of a common incandescent lamp under an equal brightness and its lifetime can reach more than one million hours. As a new-type lighting technology, LED possesses many advantages such as energy saving, green environment-friendly and flexible application etc. and can be applied in fields of direction, display, decoration, backlight and general lighting widely, which is going to bring about a revolution in the lighting field. Therefore, efficient fluorescent materials which are capable of converting the blue violet light emitted by a lighting component (including LED) into a visible light thus realizing applications in the white and multicolor lighting devices, are in an urgent need,.

In the present technical field, the main approach for achieving a LED white light emission is through the coordination of a blue light LED chip and Ce-activated rare earth garnet yellow fluorescent powder (such as YAG:Ce³⁺ or TAG:Ce³⁺), i.e. a white light emission is achieved through the complexing of the yellow light emitted by fluorescent material excited by the blue light chip and partial blue light of the blue chip. However, for such method, the used fluorescent material has tremendous limitations in application in white light LED and properties for that there are two obvious shortages namely low color rendering and high color temperature, and will be replaced by "UV-LED + tricolor fluorescent powder of red, green and blue" in future. Thus, the exploitation on a tricolor fluorescent powder suitable for UV-LED is very important.

Zhao F. et al "Luminescent properties of Eu3+, Tb3+ or Bi3+. Activated Yttrium germinates", Materials Research Bullettin, Elsevier, Kidlington, GB, Vol. 38, No. 6, 26 May 2003 (2003-05-26), pages 931-940, XP004428203, ISSN: 0025-5408, DOI: 1 0.1016/S0025-5408(03)0086-2 disclose (Y_{0.88}Eu_{0.12})₂GeO₅ and (Y_{0.91}Tb_{0.09})GeO₅.

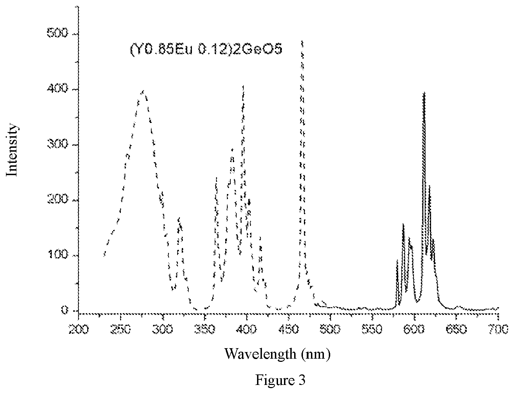

It can be seen from Figure 3 and 6 of this prior art article that the absorption intensity of the luminescence material disclosed therein significantly decrease, and even disappears, when the wavelength of exciting light is above 400 nm. In other words, the wavelength range of exciting light for the luminescence materials of thi prior art does not include the range of visible light, that is above 410 nm.

### SUMMARY OF THE INVENTION

The objective of the present invention is to provide a germanate luminescence material which has good luminescent property and is suitable for the excitation of a lighting component in the range of ultra violet and blue light (220-480) to realize the emission of red, green and blue light, aiming at the drawbacks of low color rendering and high color temperature in the prior art.

Such a goal is reached with the germanate luminescence material as claimed in claim 1.

The objective of the present invention is also to provide a method for preparing germanate luminescence material with simple technical process and product of stable quality.

Such a target is obtained with the method as claimed in claim 3 for preparing the germanate luminescence material according to the present invention.

The germanate luminescence material of the present invention is a compound of following formula: (Y₁₋ₓLnₓ)₂GeO₅, wherein a range of x is 0<x≤0.3 and Ln is one selected from a group of: Ho and Dy.

In germanate luminescence material according to the present invention, the range of x is preferably 0<x≤0.2.

A second kind of germanate luminescence material is provided, that is not part of the invention, which is a compound of following formula: (Y₁₋ₓLnₓ)₂GeO₅, wherein, Y in the formula is partly or entirely substituted by at least one selected from a group of Gd, Lu, Sc and La, wherein a range of x is 0<x≤0.3 and Ln is one selected from a group of Ce, Tm, Ho, Sm, Tb, Eu and Dy.

In this second kind of germanate luminescence material, that is not part of the present invention, the range of x is preferably 0<x≤0.2.

The method for preparing the germanate luminescence material comprises taking oxide of Y, Ln or Ge, carbonate of Y, Ln or Ge, oxalate of Y, Ln or Ge, acetate of Y, Ln or Ge, nitrate of Y, Ln or Ge, or halide of Y, Ln or Ge as raw material, wherein Ln is one selected from a group of Ce, Tm, Ho, Sm, Tb, Eu and Dy; grinding the raw material uniformly, and then sintering the raw material at 1300-1500°C for 6-24 h, and cooling a sintering product to room temperature, and obtaining the germanate luminescence material.

In the above method for preparing the germanate luminescence material of the invention, the method preferably comprises grinding the raw material uniformly and then sintering the raw material at 1350-1450°C for 8-20 h.

This method for preparing the germanate luminescence material of the invention preferably comprises weighing the raw material in a stoichiometric ration of chemical formula (Yi_xLnx)2GeO5, that is, weighing the raw material in accordance with the molar ration of each element in the chemical formula.

The second kind of germanate luminescence material that is not part of the invention, may be prepared with to method that its not part of the invention and that comprises taking oxide of Ln or Ge, carbonate of Ln or Ge, oxalate of Ln or Ge, acetate of Ln or Ge, nitrate of Ln or Ge, or halide of Ln or Ge, and oxide of Gd, Lu, Sc, La or/and Y, carbonate of Gd, Lu, Sc, La or/and Y, oxalate of Gd, Lu, Sc, La or/and Y, acetate of Gd, Lu, Sc, La or/and Y, nitrate of Gd, Lu, Sc, La or/and Y or halide of Gd, Lu, Sc, La or/and Y as raw material; wherein Ln is one selected from a group of Ce, Tm, Ho, Sm, Tb, Eu and Dy; grinding the raw material uniformly, and then sintering the raw material at 1300-1500 °C for 6-24 h, and cooling a sintered product to room temperature, and obtaining the germanate luminescence material.

Also this method, that is not part of the invention, may comprise grinding the raw material uniformly and then sintering the raw material at 1350-1450°C for 8-20 h.

Also this method, that is not part of the present invention, may comprise weighing the raw material in a stoichiometric ration of chemical formula (Y₁₋ₓLnₓ)₂GeO₅, that is, weighing the raw material in accordance with the molar ration of each element in the chemical formula.

The germanate luminescence material of the present invention is the luminescence material doping rare earth ion Y, and Ho, or Dy in germanate, which has enhanced lighting property and is more suitable for the excited luminescence of a lighting component in the range of ultra violet and blue light (220-480) and capable of achieving the emission of red, green or blue light due to the addition of rare earth ion.

The method for preparing the germanate luminescence material of the present invention is simple and reliable in technical process, has high quality product and can be applied in a great quantity of industrialization production.

### BRIEF DESCRIPTION OF THE DRAWINGS

The present invention will be further described with reference to the accompanying drawings and examples in the following. In the Figures:
Figure 1 exhibits the excitation and emission spectra of the reference germanate luminescence material (Y_{0.99}Tm_{0.01})₂GeO₅ prepared in the example 1;
Figure 2 shows the excitation and emission spectra of the reference germanate luminescence material (Y_{0.94}Tb_{0.06})₂GeO₅ prepared in the example 7;
Figure 3 represents the excitation and emission spectrums of the reference germanate luminescence material (Y_{0.85}Eu_{0.12})₂GeO₅ prepared in the example 8;

Wherein, the excitation and emission spectra are detected by SHIMADZU RF-5301PC fluorescence spectrophotometer.

### DETAILED DESCRIPTION OF THE PREFERRED EXAMPLE

### Reference Example 1: (Y_{0.99}Tm_{0.01})₂GeO₅ prepared by high temperature solid phase method

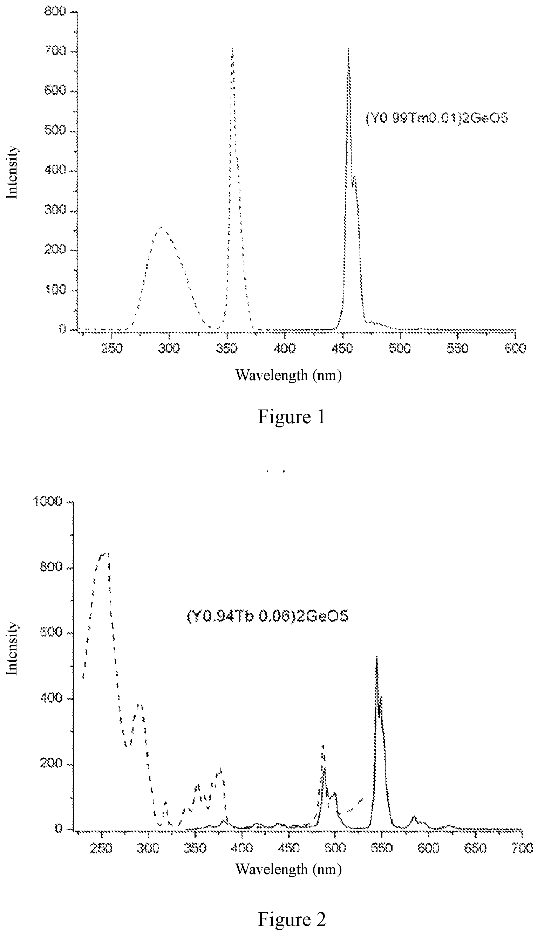

0.99mmol Y₂O₃, 0.01mmol Tm₂O₃ and 1mmol GeO₂ are placed in an agate mortar and ground to be mixed uniformly. Then the powder is transferred to a corundum crucible and placed in a high temperature furnace to be sintered at 1350 °C for 10 h. A sintered product is then placed in a mortar and ground to be uniform after cooling to room temperature and a blue emission fluorescent powder (Y_{0.99}Tm_{0.01})₂GeO₅ is obtained therewith. Figure 1 is the excitation and emission spectrums of (Y_{0.99}Tm_{0.01})₂GeO₅. It can be seen from the figure that the sample has two excitation peaks when monitored at 455nm and emits a blue light of 455nm when excited at 355nm.

### Reference Example 2: (Y_{0.99}Tm_{0.01})₂GeO₅ prepared by high temperature solid phase method

1.98mmol Y(NO₃)₃, 0.02mmol Tm(NO₃)₃ and 1mmol GeO₂ are placed in an agate mortar and ground to be mixed uniformly. The remaining steps are the same as those in the example 1 and a blue emission fluorescent powder (Y_{0.99}Tm_{0.01})₂GeO₅ is obtained.

### Reference Example 3: (Y_{0.99}Ce_{0.01})₂GeO₅ prepared by high temperature solid phase method

0.99mmol Y₂O₃, 0.01mmol CeO₂ and 1mmol GeO₂ are placed in an agate mortar and ground to be mixed uniformly. Then the powder is transferred to a corundum crucible and placed in a gas mixture of nitrogen and hydrogen in a high temperature tube-type furnace to be sintered at 1450°C for 8 h, wherein the volume ratio of nitrogen and hydrogen is 95:5. A sintered product is then placed in a mortar and ground to be uniform after cooling to room temperature and a blue emission fluorescent powder (Y_{0.99}Ce_{0.01})₂GeO₅ is obtained therewith.

### Example 4: (Y_{0.99}Ho_{0.01})₂GeO₅ prepared by high temperature solid phase method

0.99mmol Y₂O₃, 0.01mmol Ho₂O₃ and 1mmol GeO₂ are placed in an agate mortar and ground to be mixed uniformly. Then the powder is transferred to a corundum crucible and placed in a high temperature furnace to be sintered at 1500 °C for 6 h. A sintering product is then placed in a mortar and ground to be uniform after cooling to room temperature and a green emission fluorescent powder (Y_{0.99}Ho_{0.01})₂GeO₅ is obtained therewith.

### Reference Example 5: (Y_{0.98}Sm_{0.02})₂GeO₅ prepared by high temperature solid phase method

0.98mmol Y₂O₃, 0.02mmol Sm₂O₃ and 1mmol GeO₂ are placed in an agate mortar and ground to be mixed uniformly. Then the powder is transferred to a corundum crucible and placed in a high temperature furnace to be sintered at 1300°C for 20 h. A sintered product is then placed in a mortar and ground to be uniform after cooling to room temperature and a red emission fluorescent powder (Y_{0.98}Sm_{0.02})₂GeO₅ is obtained therewith.

### Example 6: (Y_{0.98}Dy_{0.02})₂GeO₅ prepared by high temperature solid phase method

0.98mmol Y₂O₃, 0.02mmol Dy₂O₃ and 1mmol GeO₂ are placed in an agate mortar and ground to be mixed uniformly. Then the powder is transferred to a corundum crucible and placed in a high temperature box-type furnace to be sintered at 1320 °C for 24 h. A sintered product is then placed in a mortar and ground to be uniform after cooling to room temperature and a white emission fluorescent powder (Y_{0.98}Dy_{0.02})₂GeO₅ is obtained therewith.

### Reference Example 7: (Y_{0.94}Tb_{0.06})₂GeO₅ prepared by high temperature solid phase method

0.94mmol Y₂O₃, 0.015mmol Tb₄O₇ and 1mmol GeO₂ are placed in an agate mortar and ground to be mixed uniformly. The remaining steps are the same as those in example 3 and a green emission fluorescent powder (Y_{0.94}Tb_{0.06})₂GeO₅ is obtained therewith. Figure 2 is the excitation and emission spectrums of (Y_{0.94}Tb _{0.06})₂GeO₅. It can be seen from the figure that the sample has multiple excitation peaks at 253nm, 290nm and 378nm and so on when monitored at 544nm and can emit a green light of 544nm when excited at 378nm.

### Reference Example 8: (Y_{0.85}Eu_{0.12})₂GeO₅ prepared by high temperature solid phase method

0.85mmol Y₂O₃, 0.12mmol Eu₂O₃ and 1mmol GeO₂ are placed in an agate mortar and ground to be mixed uniformly. The remaining steps are the same as those in example 1 and a red emission fluorescent powder (Y_{0.85}Eu_{0.12})₂GeO₅ is obtained therewith. Figure 3 is the excitation and emission spectrums of (Y_{0.85}Eu _{0.12})₂GeO₅. It can be seen from the figure that the sample has multiple excitation peaks at 276nm, 395nm and 466nm when monitored at 612nm and can emit a red light of 612nm when excited at 395nm.

### Reference Example 9: (Y_{0.89}Gd_{0.1}Tm_{0.01})₂GeO₅ prepared by high temperature solid phase method

0.89mmol Y₂O₃, 0.1mmol Gd₂O₃, 0.01mmol Tm₂O₃ and 1mmol GeO₂ are placed in an agate mortar and ground to be mixed uniformly. The remaining steps are the same as those in example 1 and a blue emission fluorescent powder (Y_{0.89}Gd_{0.1}Tm_{0.01})₂GeO₅ is obtained therewith.

### Reference Example 10: (Y_{0.69}Gd_{0.3}Tm_{0.01})₂GeO₅ prepared by high temperature solid phase method

0.69mmol Y₂O₃, 0.3mmol Gd₂O₃, 0.01 mmol Tm₂O₃ and 1mmol GeO₂ are placed in an agate mortar and ground to be uniformly mixed. The remaining steps are the same as those in example 1 and a blue emission fluorescent powder (Y_{0.69}Gd_{0.3}Tm_{0.01})₂GeO₅ is obtained therewith.

### ReferenceExample 11: (Y_{0.89}Gd_{0.1}Ho_{0.01})₂GeO₅ prepared by high temperature solid phase method

0.89mmol Y₂O₃, 0.1mmol Gd₂O₃, 0.01mmol Ho₂O₃ and 1mmol GeO₂ are placed in an agate mortar and ground to be mixed uniformly. The remaining steps are the same as those in example 1 and a green emission fluorescent powder (Y_{0.89}Gd_{0.1}Tm_{0.01})₂GeO₅ is obtained therewith.

### Reference Example 12: (Y_{0.88}Gd_{0.1}Sm_{0.02})₂GeO₅ prepared by high temperature solid phase method

0.88mmol Y₂O₃, 0.1mmol Gd₂O₃, 0.02mmol Sm₂O₃ and 1mmol GeO₂ are placed in an agate mortar and ground to be mixed uniformly. The remaining steps are the same as those in example 1 and a red emission fluorescent powder (Y_{0.88}Gd_{0.1}Sm_{0.02})₂GeO₅ is obtained therewith.

### Reference Example 13: (Y_{0.88}Gd_{0.1}Dy_{0.02})₂GeO₅ prepared by high temperature solid phase method

0.88mmol Y₂O₃, 0.1 mmol Gd₂O₃, 0.02mmol Dy₂O₃ and 1mmol GeO₂ are placed in an agate mortar and ground to be mixed uniformly. The remaining steps are the same as those in example 1 and a white emission fluorescent powder (Y_{0.88}Gd_{0.1}Dy_{0.02})₂GeO₅ is obtained therewith.

### Reference Example 14: (Y_{0.84}Gd_{0.1}Tb_{0.06})₂GeO₅ prepared by high temperature solid phase method

0.84mmol Y₂O₃, 0.1 mmol Gd₂O₃, 0.06mmol Tb₄O₇ and 1mmol GeO₂ are placed in an agate mortar and ground to be mixed uniformly. The remaining steps are the same as those in example 3 and a green emission fluorescent powder (Y_{0.84}Gd_{0.1}Tb_{0.06})₂GeO₅ is obtained therewith.

### Reference Example 15: (Y_{0.75}Gd_{0.1}Eu_{0.15})₂GeO₅ prepared by high temperature solid phase method

0.75mmol Y₂O₃, 0.1mmol Gd₂O₃, 0.15mmol Eu₂O₃ and 1mmol GeO₂ are placed in an agate mortar and ground to be mixed uniformly. The remaining steps are the same as those in example 1 and a red emission fluorescent powder (Y_{0.75}Gd_{0.1}Tb_{0.15})₂GeO₅ is obtained therewith.

### Reference Example 16: (Y_{0.89}La_{0.1}Tm_{0.01})₂GeO₅ prepared by high temperature solid phase method

0.89mmol Y₂O₃, 0.1 mmol La₂O₃, 0.01 mmol Tm₂O₃ and 1 mmol GeO₂ are placed in an agate mortar and ground to be mixed uniformly. The remaining steps are the same as those in example 1 and a blue emission fluorescent powder (Y_{0.89}La_{0.1}Tm_{0.01})₂GeO₅ is obtained therewith.

### Reference Example 17: (Y_{0.89}Lu_{0.1}Tm_{0.01})₂GeO₅ prepared by high temperature solid phase method

0.89mmol Y₂O₃, 0.1 mmol Lu₂O₃, 0.01 mmol Tm₂O₃ and 1 mmol GeO₂ are placed in an agate mortar and ground to be mixed uniformly. The remaining steps are the same as those in example 1 and a blue emission fluorescent powder (Y_{0.89}Lu_{0.1}Tm_{0.01})₂GeO₅ is obtained therewith.

### Reference Example 18: (Y_{0.89}Sc_{0.1}Tm_{0.01})₂GeO₅ prepared by high temperature solid phase method

0.89mmol Y₂O₃, 0.1mmol Sc₂O₃, 0.01mmol Tm₂O₃ and 1mmol GeO₂ are placed in an agate mortar and ground to be mixed uniformly. The remaining steps are the same as those in example 1 and a blue emission fluorescent powder (Y_{0.89}Sc_{0.1}Tm_{0.01})₂GeO₅ is obtained therewith.

### Reference Example 19: (Y_{0.89}Sc_{0.1}Tm_{0.01})₂GeO₅ prepared by high temperature solid phase method

0.89mmol Y₂(CO₃)₃, 0.1mmol Sc₂(C₂O₄)₃, 0.02mmol Tm(CH₃COO)₃ and 1mmol GeO₂ are placed in an agate mortar and ground to be mixed uniformly. The remaining steps are the same as those in example 1 and a blue emission fluorescent powder (Y_{0.89}Sc_{0.1}Tm_{0.01})₂GeO₅ is obtained therewith.

### Reference Example 20: (Y_{0.7}Tm_{0.3})₂GeO₅ prepared by high temperature solid phase method

0.7mmol Y₂(CO₃)₃, 0.3mmol Tm₂(C₂O₄)₃ and 1mmol GeO₂ are placed in an agate mortar and ground to be mixed uniformly. The remaining steps are the same as those in example 1 and a blue emission fluorescent powder (Y_{0.7}Tm_{0.3})₂GeO₅ is obtained therewith.

### Reference Example 21: (Y_{0.8}Eu_{0.2})₂GeO₅ prepared by high temperature solid phase method

1.6mmol Y(CH₃COO)₃, 0.4mmol Eu(CH₃COO)₃ and 1mmol GeO₂ are placed in an agate mortar and ground to be mixed uniformly. The remaining steps are the same as those in example 1 and a red emission fluorescent powder (Y_{0.8}Eu_{0.2})₂GeO₅ is obtained therewith.

### Example 22: (Y_{0.999}Ho_{0.001})₂GeO₅ prepared by high temperature solid phase method

1.998mmol Y(CH₃COO)₃, 0.002mmol Ho(CH₃COO)₃ and 1mmol GeO₂ are placed in an agate mortar and ground to be mixed uniformly. The remaining steps are the same as those in example 1 and a green emission fluorescent powder (Y_{0.999}Ho_{0.001})₂GeO₅ is obtained therewith.

## Claims

1. A germanate luminescence material, wherein the germanate luminescence material is a compound of following formula: (Y₁₋ₓLnₓ)₂GeO₅, wherein a range of x is 0<x≤0.3 and Ln is one selected from a group of Ho and Dy;
the germanate luminescence material is suitable to be excited in a range of blue violet light of 220-480 nm.

2. The germanate luminescence material according to claim 1, wherein the range of the x is 0<x≤0.2.

3. A method for preparing the germanate luminescence material of claim 1, wherein the method comprising taking oxide of Y, Ln or Ge, carbonate of Y, Ln or Ge, oxalate of Y, Ln or Ge, acetate of Y, Ln or Ge, nitrate of Y, Ln or Ge, or halide of Y, Ln or Ge as raw material, wherein Ln is one selected from a group of Ho and Dy; grinding the raw material uniformly, and then sintering the raw material at 1300-1500°C for 6-24 h, and cooling a sintered product to room temperature, and obtaining the germanate luminescence material.

4. A method for preparing the germanate luminescence material of claim 2, wherein the method comprising taking oxide of Y, Ln or Ge, carbonate of Y, Ln or Ge, oxalate of Y, Ln or Ge, acetate of Y, Ln or Ge, nitrate of Y, Ln or Ge, or halide of Y, Ln or Ge as raw material, wherein Ln is one selected from a group of Ho and Dy; grinding the raw material uniformly, and then sintering the raw material 1300-1500°C for 6-24 h, and cooling a sintered product to room temperature, and obtaining the germanate luminescence material.

5. The method for preparing the germanate luminescence material according to claim 3, wherein the method comprises weighing the raw material in a stoichiometric ration of chemical formula (Y₁₋ₓLnₓ)₂GeO₅, grinding the raw material uniformly and then sintering the raw material at 1350-1450°C for 8-20 h.

6. The method for preparing the germanate luminescence material according to claim 4, wherein the method comprises weighing the raw material in a stoichiometric ration of chemical formula (Y₁₋ₓLnₓ)₂GeO₅, grinding the raw material uniformly and then sintering the raw material at 1350-1450°C for 8-20 h.

## Patentansprüche

1. Ein Germanat-Lumineszenzmaterial, worin das Germanat-Lumineszenzmaterial eine Verbindung aus der folgenden Formel ist: (Y₁₋ₓLnₓ)₂GeO₅, wobei ein Bereich von x 0 < x ≤ 0,3 ist, und Ln aus einer Gruppe von Ho und Dy ausgewählt wird;
das Germanat-Lumineszenzmaterial ist geeignet, in einem Bereich von blauviolettem Licht von 220-480 nm angeregt zu werden.

2. Das Germanat-Lumineszenzmaterial nach Anspruch 1, wobei der Bereich der x 0 < x ≤0,2 ist.

3. Ein Verfahren für die Vorbereitung des Germanat-Lumineszenzmaterials nach Anspruch 1, wobei das Verfahren umfasst das Aufnehmen von Oxid von Y, Ln oder Ge, von Karbonat von Y, Ln oder Ge, von Oxalat von Y, Ln oder Ge, von Acetat von Y, Ln oder Ge, von Nitrat von Y, Ln oder Ge oder von Halogenid von Y, Ln oder Ge als Rohmaterial, wobei Ln aus einer Gruppe von Ho und Dy ausgewählt wird; das gleichmäßige Schleifen des Rohmaterials, dann das Sintern des Rohmaterials auf 1300-1500°C für 6-24 Stunden und das Kühlen eines gesinterten Produktes auf Raumtemperatur, und das Erhalten des Germanat-Lumineszenzmaterials.

4. Ein Verfahren für die Vorbereitung des Germanat-Lumineszenzmaterials nach Anspruch 2, wobei das Verfahren umfasst das Aufnehmen von Oxid von Y, Ln oder Ge, von Karbonat von Y, Ln oder Ge, von Oxalat von Y, Ln oder Ge, von Acetat von Y, Ln oder Ge, von Nitrat von Y, Ln oder Ge oder von Halogenid von Y, Ln oder Ge als Rohmaterial, wobei Ln aus einer Gruppe von Ho und Dy ausgewählt wird; das gleichmäßige Schleifen des Rohmaterials, dann das Sintern des Rohmaterials auf 1300-1500°C für 6-24 Stunden und das Kühlen eines gesinterten Produktes auf Raumtemperatur, und das Erhalten des Germanat-Lumineszenzmaterials.

5. Das Verfahren für die Vorbereitung des Germanat-Lumineszenzmaterials nach Anspruch 3, wobei das Verfahren umfasst das Wiegen des Rohmaterials mit der chemischen Formel (Y₁₋ₓLnₓ)₂GeO₅ in einem stöchiometrischen Verhältnis, das gleichmäßige Schleifen des Rohmaterials und dann das Sintern des Rohmaterials auf 1350-1450°C für 8-20 Stunden.

6. Das Verfahren für die Vorbereitung des Germanat-Lumineszenzmaterials nach Anspruch 4, wobei das Verfahren umfasst das Wiegen des Rohmaterials mit der chemischen Formel (Y₁₋ₓLnₓ)₂GeO₅ in einem stöchiometrischen Verhältnis, das gleichmäßige Schleifen des Rohmaterials und dann das Sintern des Rohmaterials auf 1350-1450°C für 8-20 Stunden.

## Revendications

1. Matériau luminescent germanate, dans lequel le matériau luminescent germanate est un composé de formule : (Y₁₋ₓLnₓ)₂GeO₅, où x est dans un intervalle 0 < x ≤0,3 et Ln est choisi dans un groupe de Ho et Dy ;
le matériau luminescent germanate est apte à être excité dans un intervalle de lumière bleu-violet de 220-480 nm.

2. Matériau luminescent germanate selon la revendication 1, où l'intervalle de x est 0 < x ≤0,2.

3. Méthode pour préparer le matériau luminescent germanate de la revendication 1, dans laquelle la méthode comprend la prise d'oxyde de Y, Ln ou Ge, de carbonate de Y, Ln ou Ge, d'oxalate de Y, Ln ou Ge, d'acétate de Y, Ln ou Ge, de nitrate de Y, Ln ou Ge ou de halogénure de Y, Ln ou Ge comme matière première, où Ln est choisi dans un groupe de Ho et Dy ; le broyage uniforme de la matière première, puis le frittage de la matière première à 1300-1500°C pendant 6 à 24 h et le refroidissement d'un produit fritté à température ambiante et l'obtention du matériau luminescent germanate.

4. Méthode pour préparer le matériau luminescent germanate de la revendication 2, dans laquelle la méthode comprend la prise d'oxyde de Y, Ln ou Ge, de carbonate de Y, Ln ou Ge, d'oxalate de Y, Ln ou Ge, d'acétate de Y, Ln ou Ge, de nitrate de Y, Ln ou Ge ou de halogénure de Y, Ln ou Ge comme matière première, où Ln est choisi dans un groupe de Ho et Dy ; le broyage uniforme de la matière première, puis le frittage de la matière première à 1300-1500°C pendant 6 à 24 h et le refroidissement d'un produit fritté à température ambiante et l'obtention du matériau luminescent germanate.

5. Méthode pour préparer le matériau luminescent germanate selon la revendication 3, dans laquelle la méthode comprend la pesée de la matière première de formule chimique (Y₁₋ₓLnₓ)₂GeO₅ dans un rapport stoechiométrique, le broyage uniforme de la matière première et puis le frittage de la matière première à 1350-1450 °C pendant 8 à 20 h.

6. Méthode pour préparer le matériau luminescent germanate selon la revendication 4, dans laquelle la méthode comprend la pesée de la matière première de formule chimique (Y₁₋ₓLnₓ)₂GeO₅ dans un rapport stoechiométrique, le broyage uniforme de la matière première et puis le frittage de la matière première à 1350-1450 °C pendant 8 à 20 h.
